# EUROPEAN PATENT SPECIFICATION

(11) **EP 0 857 409 B1**
(45) Date of publication and mention of the grant of the patent: **01.08.2001**
(21) Application number: 98200293.3
(22) Date of filing: 02.02.1998
(51) Int. Cl.: A01C 17/00, A01C 15/00, A01D 75/20

(54) **A fertilizer spreader**
Düngerstreuer
Epandeur d'engrais

(30) Priority: 11.02.1997 NL 1005250
(43) Date of publication of application: 12.08.1998
(73) Proprietor: MAASLAND N.V., 3155 PD Maasland (NL)
(72) Inventor: Mulder, Herman, 2554 AV s'-Gravenhage (NL)
(74) Representative: Corten, Maurice Jean F.M.

(56) References cited:
- EP-A- 0 558 430
- EP-A- 0 622 010
- DE-A- 4 309 668
- GB-A- 2 037 132

## Description

The invention relates to a fertilizer spreader as described in the preamble of claim 1.

Such a fertilizer spreader is known from GB-PA-2,037,132, in which agricultural machines are described with protective means which, when being touched by a person or an object, stop the movement of a moving part of the machine. There is described that upon movement of a protective bracket there is activated an electric switch, as a result of which an overload coupling of a spreading disc is engaged and the drive is interrupted.

The invention is especially of importance for fertilizer spreaders, because the spreading disc(s) is/are located at the rear side of the machine, the protective means are usually not properly visible from the tractor and, with fertilizer spreaders, it frequently occurs that, in order to make it possible to distribute different types of fertilizer, the blades of the spreading disc have to be adjusted or changed.

It is an object of the present invention to provide a fertilizer spreader with which the blades of the spreading disc can easily be accessed while still providing sufficient safety for the user.

In accordance with the invention the fertilizer spreader of the sort as defined above is characterized in that the protective means are capable of being temporarily moved, e.g. pivoted away entirely or partially, and in that the fertilizer spreader and/or a tractor coupled thereto are/is provided with means which give a warning signal if the fertilizer spreader is put into operation without the protective means having been placed in the protective position, which warning means only stop giving the signal when the protective means have been placed in the protective position. Since the protective bracket serving as protective means is capable of being moved away entirely or partially, the blades or a metering device are/is more easily accessible to the user. In addition since the fertilizer spreader and/or a tractor coupled thereto are/is provided with means which give a warning signal if the fertilizer spreader is put into operation without the protective means having been placed in the protective position, which warning means only stops giving the signal when the protective means have been placed in the protective position. The risk is prevented that the user does not put back the protective bracket that has been moved away or that a driver of the tractor to which the fertilizer spreader is coupled sets the ejector elements rotating without the protective bracket having been placed in its position.

By means of this construction the advantage is obtained that the fertilizer spreader, in spite of the protective bracket being moved away, is secured because of the fact that the user is warned.

It is known per se from EP-A-0 558 430 that the drive of an agricultural device is disengaged when a protective means is moved in an inoperative position. However, no means for providing a warning signal are disclosed. The present invention further relates to a fertilizer spreader provided with one or more moving ejector elements, such as at least a spreading disc with blades, and provided with protective means, such as a protective bracket, which surround the blades at some distance at least at the rear side of the machine and prevent the ejector elements from being touched in an undesirable manner, characterized in that the protective means are capable of being temporarily moved, e.g. pivoted away entirely or partially, and in that the protective elements cannot be moved away as long as the drive of the fertilizer spreader has not been disengaged, and the drive can only be engaged after the protective bracket has been placed in the protective position. In this manner there is obtained an additional protection for the user.

In accordance with a further aspect of the invention, the machine comprises means, such as a switch, which prevent one or more spreading discs from being set rotating as long as the bracket portion is in the moved away position. In this manner a complete protection of the user is obtained.

With reference to a number of embodiments the invention will be explained in further detail.
Figure 1 is a side view of a fertilizer spreader which, according to the invention, is provided with a protective bracket;
Figure 2 is a plan view of this protective bracket;
Figure 3 is a side view of a fertilizer spreader whose drive is disengaged,
Figure 4 is a plan view of a protective bracket for a fertilizer spreader with spreading discs, and
Figure 5 is a side view of a fertilizer spreader whose protective bracket cannot be moved away upwards as long as the spreading disc is rotating.

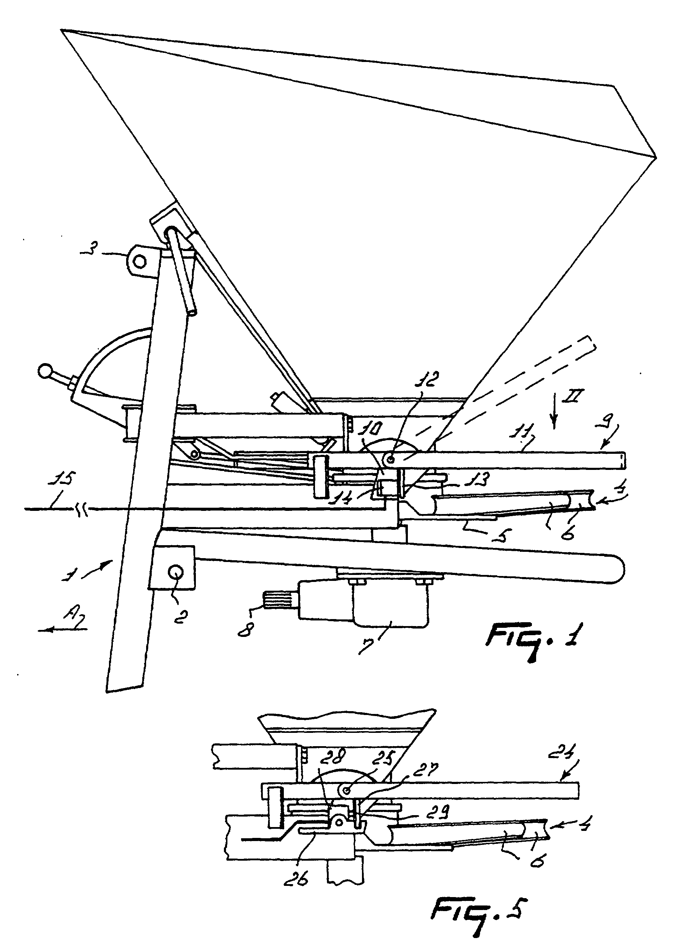

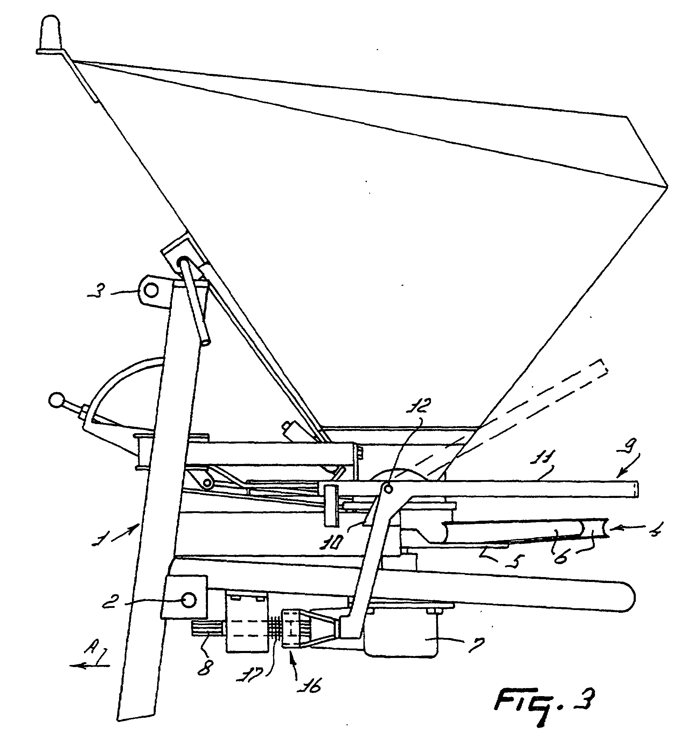

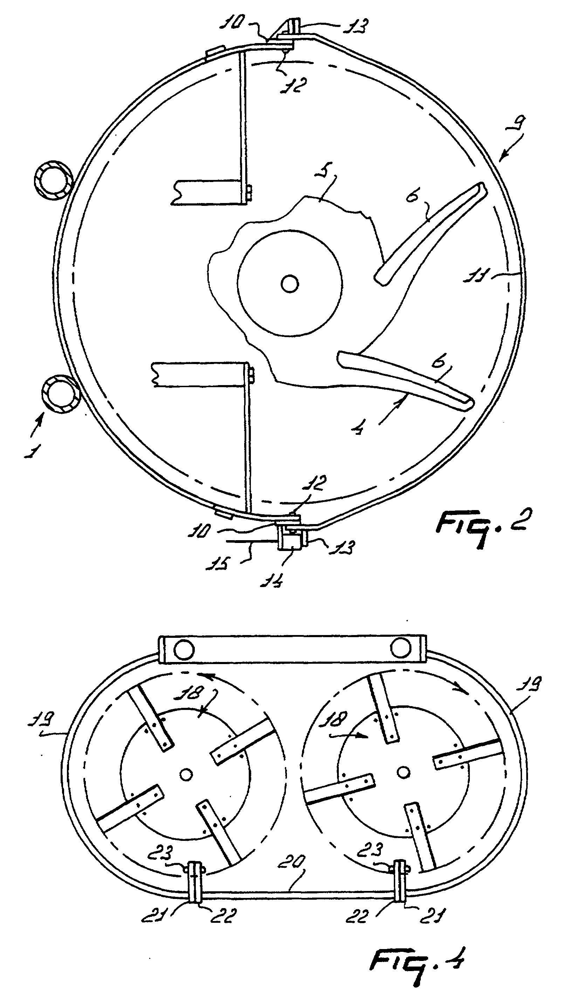

Figures 1 and 2 show a fertilizer spreader comprising a frame 1 which is provided with coupling means 2, 3 by means of which the spreader can be coupled to the three-point lifting hitch of a non-shown tractor. At the lower side of the frame 1 there are disposed two coupling means 2 for the two lower lifting arms and there is additionally provided a coupling means 3 which is capable of being coupled to the upper hitch point of the lifting hitch of the tractor. The fertilizer spreader has an ejector element 4 in the form of a spreading disc 5 with freely projecting blades 6.

The spreading disc 5 can be driven in a rotating manner via a gear box 7 which is coupled to the power take-off shaft of the tractor via a drive shaft 8 and a non-shown intermediary shaft.

The fertilizer spreader is provided with protective means 9, in this case designed as a protective bracket 9. This protective bracket surrounds the spreading disc 5 at some distance and is located at a somewhat higher level than that of the spreading disc 5, so that spreading of the fertilizer is not hampered by the protective bracket 9. The protective bracket 9 serves to prevent the user of the spreader from coming into contact in an undesirable manner with the rotating blades 6. In this embodiment, near the rear side and lateral side of the machine the protective bracket 9 has a portion 10 by which it is fastened to the machine, e.g. by non-shown screws, and additionally a rear portion 11 which is fastened to the protective bracket portion 10 so as to be able to move upwards. The rear protective bracket portion 11 is able to move upwards by means of axes 12, so that, if desired, the blades are accessible to the user.

This may be of importance for various reasons, e.g. for the purpose of adjusting the blades 6, if an other type of fertilizer has to be distributed. Such an adjustment may sometimes also be desirable in the case of edge-spreading, i.e. in order to decrease the spread pattern at one side of the machine, so that it is possible, for example, to spread along the bank of a ditch without throwing un undesirable amount of fertilizer into the ditch.

Sometimes such an adjustment may also be desirable to adjust a metering device for the fertilizer or even to exchange the metering device for an other one, e.g. a "plus or minus" device for an electronically controlled device. The rear protective bracket portion 11 rests on a stop 13, so that the protective bracket 9 maintains its protective position during operation. In this respect it may additionally be desirable to dispose non-shown magnetic contacts between the protective bracket 9 and the stop 13.

Also in the moved away position, shown by dashed lines in Figure 1, the protective bracket 9 should preferably maintain its position and this may also be realized e.g. by means of (non-shown) magnetic contacts.

It is alternatively possibile, for example, to fix the rear protective bracket portion 11 in both positions on the axes 12 by means of non-shown wing nuts.

As it is in contravention of the law on public security to place the protective bracket 9 in the moved away position, it is desirable to take measures in accordance with the invention in order to prevent accidents.

This applies in particular with fertilizer spreaders, the fertilizer being spread in rearward direction and the protective bracket 9 being located at the rear side of the machine, so that the tractor driver has an insufficient view of the position of the protective bracket 9. Therefore, it is desirable that, in accordance with the invention, there are provided warning means which give a warning signal when the protective bracket 9 has been put out of operation, which signal is stopped when the protective bracket 9 has been replaced in the protective position.

In this embodiment, an electric switch 14 serving as sensor is located in the vicinity of one of the axes 12. If the protective bracket 9 moves upwards, the contact of the switch 14 is broken. As the switch 14 can be coupled to the tractor via an electric cable 15, there can be given a signal by breaking the contact. This signal may be constituted e.g. by a sound signal or a light signal.

When the protective bracket 9 has moved downwards again, so that the protective position has been reassumed, the signal will be stopped because the contact of the switch 14 is closed. It is also possible to activate an other sensor, e.g. a magnetic sensor. The latter may e.g. be mounted in the vicinity of the axes 12 in such a manner that by rotating the rear bracket portion 11 of the protective bracket 9 this sensor is activated. It is also possible to mount a light sensor near the protective bracket. The signal supplying means will preferably be mounted in the cabin of the tractor.

Figure 3 shows a fertilizer spreader corresponding to the one of Figures 1 and 2 having a drive which can be disengaged. Therefore, corresponding parts have been indicated by the same reference numerals.

With the latter fertilizer spreader, by opening the electric switch 14 a coupling 16 in the drive shaft of the fertilizer spreader is activated in such a manner that a coupling of two shaft portions comes free and is shifted by the pressure of a spring 17, so that the drive of the spreading disc 5 is disengaged.

When, because of the fact that the protective bracket portion 11 moves downwards again, the electric current is switched on, the drive shaft 8 is coupled again against spring pressure and the spreading disc 5 can be driven again.

Figure 4 shows a plan view of the spreading discs 18 of a spreader having two spreading discs. Parts corresponding to those of Figures 1 to 3 have been indicated by the same reference numerals. A protective bracket 19 surrounds both discs. As it is desirable for the user of the fertilizer spreader to have access to the blades 6, e.g. for replacing them by an other type of blades or for adjusting same, a rear straight bracket portion 20 is disposed so as to be capable of being moved away upwards. For this purpose the protective bracket has two arms 21 which are fastened, capable of moving, to arms 22 of the protective bracket portion 20 that is capable of being moved away. Consequently, the axes 23 are located at some distance from the straight protective bracket portion 20, so that it is possible for the protective bracket to move upwards.

In an equal manner as described with regard to Figures 1 to 3, on the latter machine, more in particular on the tractor, there are provided means which give a signal when the bracket portion 20 is moved away, which signal stops when the bracket portion 20 has reassumed the protective position.

In the above described embodiments, the bracket portion 20, that is capable of being moved away, is capable of moving away about an axis extending transversely to the direction of travel A of the tractor. However, it will be obvious that the protective bracket 20 will also be able to move rearwards about an upwardly extending axis located at an end of the portion 20 that is capable of being moved away.

The other end of this bracket portion 20 that is capable of being moved away then has a connection to the remaining part of the protective bracket 19 and also at that point there may be located a switch or an other sensor, e.g. an optical sensor.

It is also possible that the bracket portion 20 is capable of being moved away about an axis extending in the direction of travel; this axis preferably extends obliquely upwards, so that, when moving away, the bracket portion 20 remains free from the hopper of the fertilizer spreader.

Although a warning signal is preferably disposed on the tractor, if required, such a signal may be provided as well on the fertilizer spreader.

The disengagement of the drive of the fertilizer spreader can be effected in addition to a warning signal.

Figure 5 shows a fertilizer spreader which, like the above described fertilizer spreader, is provided with protective means. Parts corresponding to those of Figures 1 to 3 are indicated by the same reference numerals.

In this case the spreader has a bracket portion 24 that is capable of being moved away upwards about two axes 25, as described in the foregoing. However, in this case moving away is prevented by a lock 26 via a protrusion 27 fastened to the bracket portion.

The lock 26 maintains its position when the spreading disc 5 is rotating. When the drive of the spreading disc is stopped, a time switch 28 ensures that after some time the lock can be opened or, if required, is opened automatically. In order to prevent that, as long as the bracket portion 24 is in the moved away position, the spreading disc can be set rotating again, the bracket portion and the frame 1 include an electric switch 29 preventing same, the arrangement being such as described above. Also in this case signals may be given if required, like in the other embodiments.

## Claims

1. A fertilizer spreader provided with one or more moving ejector elements, such as at least a spreading disc (5) with blades (6), and provided with protective means (9), such as a protective bracket (9), which surround the blades (6) at some distance at least at the rear side of the machine and prevent the ejector elements from being touched in an undesirable manner, characterized in that the protective means are capable of being temporarily moved, e.g. pivoted, away entirely or partially, and in that the fertilizer spreader and/or a tractor coupled thereto are/is provided with means which give a warning signal if the fertilizer spreader is put into operation without the protective means having been placed in the protective position, which warning means only stop giving the signal when the protective means have been placed in the protective position.

2. A fertilizer spreader as claimed in claim 1, characterized in that upon moving away of the protective means a contact of a sensor is opened or closed, so that the warning signal is activated.

3. A fertilizer spreader as claimed in claim 1 or 2, characterized in that in addition to the warning signal the ejector elements are prevented from being set in motion.

4. A fertilizer spreader as claimed in claim 1, 2 or 3, characterized in that the warning signal comprises a sound signal.

5. A fertilizer spreader as claimed in any one of the preceding claims, characterized in that the warning signal comprises a light signal.

6. A fertilizer spreader as claimed in any one of claims 1 to 5, characterized in that the sensor is a magnetic sensor.

7. A fertilizer spreader as claimed in any one of claims 1 to 5, characterized in that the sensor is an optical sensor.

8. A fertilizer spreader as claimed in any one of claims 1 to 6, characterized in that upon moving away of the protective means an electric contact (14) is opened or closed.

9. A fertilizer spreader as claimed in any one of the preceding claims, characterized in that the protective means are rotatable about one or more axes (12, 23), while upon rotation a warning signal is put into operation.

10. A fertilizer spreader as claimed in any one of the preceding claims, characterized in that the fertilizer spreader has a drive shaft (8) comprising a coupling (16) which is disengaged when the warning signal is given, so that the drive of the ejector elements is stopped.

11. A fertilizer spreader as claimed in any one of the preceding claims, characterized in that the machine is provided with two spreading discs (18) which are surrounded at least partially by protective means in the form of a protective bracket (19), while at the rear side of the spreader the protective bracket (20) is capable of being moved away partially.

12. A fertilizer spreader as claimed in any one of the preceding claims, characterized in that the spreading disc(s) (5, 18) has/have adjustable and/or detachable blades (6).

13. A fertilizer spreader as claimed in any one of the preceding claims, characterized in that the blades (6) are freely projecting.

14. A fertilizer spreader as claimed in any one of the preceding claims, characterized in that the protective elements cannot be moved away as long as the drive of the fertilizer spreader has not been disengaged, and the drive can only be engaged after the protective bracket (19) has been placed in the protective position.

15. A fertilizer spreader as claimed in any of the preceding claims provided with one or more moving ejector elements, such as at least a spreading disc (5) with blades (6), and provided with protective means (9), such as a protective bracket (9), which surround the blades (6) at some distance at least at the rear side of the machine and prevent the ejector elements from being touched in an undesirable manner, characterized in that the protective means are capable of being temporarily moved, e.g. pivoted away entirely or partially, and in that the protective elements cannot be moved away as long as the drive of the fertilizer spreader has not been disengaged, and the drive can only be engaged after the protective bracket (19) has been placed in the protective position.

16. A fertilizer spreader as claimed in claim 14 or 15, characterized in that the machine comprises means, such as a switch (27), which prevent the spreading disc(s) (5) from being set rotating as long as the bracket portion (24) is in the moved away position.

## Patentansprüche

1. Düngerstreuer mit einem oder mehreren sich bewegenden Streuelementen, wie z. B. mindestens eine Streuscheibe (5) mit Wurfschaufeln (6), sowie mit einer Schutzvorrichtung (9), wie z. B. einem Schutzbügel (9), der die Wurfschaufeln (6) in einigem Abstand zumindest auf der Rückseite der Maschine umgibt und verhindert, daß die Streuelemente in unerwünschter Weise berührt werden,
dadurch gekennzeichnet, daß die Schutzvorrichtung vorübergehend ganz oder teilweise wegbewegt, beispielsweise weggeschwenkt, werden kann, und daß der Düngerstreuer und/oder ein an ihn angeschlossener Schlepper mit einer Vorrichtung versehen sind/ist, die ein Warnsignal gibt, wenn der Düngerstreuer in Betrieb gesetzt wird, ohne daß die Schutzvorrichtung in die Schutzposition eingestellt worden ist, wobei die Warnvorrichtung das Signal erst dann nicht mehr gibt, wenn die Schutzvorrichtung in die Schutzposition eingestellt worden ist.

2. Düngerstreuer nach Anspruch 1,
dadurch gekennzeichnet, daß beim Wegbewegen der Schutzvorrichtung ein Kontakt eines Sensors geöffnet oder geschlossen wird, so daß das Warnsignal aktiviert wird.

3. Düngerstreuer nach Anspruch 1 oder 2,
dadurch gekennzeichnet, daß zusätzlich zu dem Warnsignal verhindert wird, daß die Streuelemente in Bewegung gesetzt werden.

4. Düngerstreuer nach Anspruch 1, 2 oder 3,
dadurch gekennzeichnet, daß das Warnsignal ein Tonsignal umfaßt.

5. Düngerstreuer nach einem der vorhergehenden Ansprüche,
dadurch gekennzeichnet, daß das Warnsignal ein Lichtsignal umfaßt.

6. Düngerstreuer nach einem der Ansprüche 1 bis 5,
dadurch gekennzeichnet, daß der Sensor ein magnetischer Sensor ist.

7. Düngerstreuer nach einem der Ansprüche 1 bis 5,
dadurch gekennzeichnet, daß der Sensor ein optischer Sensor ist.

8. Düngerstreuer nach einem der Ansprüche 1 bis 6,
dadurch gekennzeichnet, daß beim Wegbewegen der Schutzvorrichtung ein elektrischer Kontakt (14) geöffnet oder geschlossen wird.

9. Düngerstreuer nach einem der vorhergehenden Ansprüche,
dadurch gekennzeichnet, daß die Schutzvorrichtung um eine oder mehrere Achsen (12, 23) drehbar ist, wobei beim Drehen ein Warnsignal aktiviert wird.

10. Düngerstreuer nach einem der vorhergehenden Ansprüche,
dadurch gekennzeichnet, daß der Düngerstreuer eine Antriebswelle (8) mit einer Kupplung (16) aufweist, die gelöst wird, wenn das Warnsignal gegeben wird, so daß der Antrieb der Streuelemente gestoppt wird.

11. Düngerstreuer nach einem der vorhergehenden Ansprüche,
dadurch gekennzeichnet, daß die Maschine mit zwei Streuscheiben (18) versehen ist, die zumindest teilweise von einer Schutzvorrichtung in Form eines Schutzbügels (19) umgeben sind, wobei der Schutzbügel (20) auf der Rückseite des Streuers teilweise wegbewegt werden kann.

12. Düngerstreuer nach einem der vorhergehenden Ansprüche,
dadurch gekennzeichnet, daß die Streuscheibe(n) (5, 18) verstellbare und/oder lösbare Wurfschaufeln (6) aufweist/aufweisen.

13. Düngerstreuer nach einem der vorhergehenden Ansprüche,
dadurch gekennzeichnet, daß die Wurfschaufeln (6) frei herausstehen.

14. Düngerstreuer nach einem der vorhergehenden Ansprüche,
dadurch gekennzeichnet, daß die Schutzelemente nicht wegbewegt werden können, solange die Antriebsverbindung des Düngerstreuers nicht gelöst worden ist, und daß die Antriebsverbindung erst dann hergestellt werden kann, wenn der Schutzbügel (19) in die Schutzposition eingestellt worden ist.

15. Düngerstreuer nach einem der vorhergehenden Ansprüche mit einem oder mehreren sich bewegenden Streuelementen, wie z. B. mindestens einer Streuscheibe (5) mit Wurfschaufeln (6), sowie mit einer Schutzvorrichtung (9), wie z. B. einem Schutzbügel (9), der die Wurfschaufeln (6) in einigem Abstand zumindest auf der Rückseite der Maschine umgibt und verhindert, daß die Streuelemente in unerwünschter Weise berührt werden,
dadurch gekennzeichnet, daß die Schutzvorrichtung vorübergehend ganz oder teilweise wegbewegt, beispielsweise weggeschwenkt, werden kann, und daß die Schutzelemente nicht wegbewegt werden können, solange die Antriebsverbindung des Düngerstreuers nicht gelöst worden ist, und daß die Antriebsverbindung erst dann hergestellt werden kann, wenn der Schutzbügel (19) in die Schutzposition eingestellt worden ist.

16. Düngerstreuer nach Anspruch 14 oder 15,
dadurch gekennzeichnet, daß die Maschine eine Vorrichtung, wie z. B. einen Schalter (27), umfaßt, der verhindert, daß die Streuscheibe(n) (5) in Drehung versetzt wird/werden, solange sich der Bügelteil (24) in der wegbewegten Position befindet.

## Revendications

1. Epandeur d'engrais muni d'un ou de plusieurs éléments éjecteurs mobiles, tels qu'au moins un disque d'épandage (5) muni de lames (6), et muni de moyens de protection (9), tels qu'un étrier de protection (9), qui entourent les lames (6) à une certaine distance au moins au niveau du côté arrière de la machine, et qui empêchent que les éléments éjecteurs soient touchés d'une manière non-souhaitable, caractérisé en ce que les moyens de protection peuvent être éloignés de manière temporaire, par exemple pivotés, entièrement ou partiellement, et en ce que l'épandeur d'engrais et/ou un tracteur accouplé à celui-ci sont munis de moyens qui émettent un signal d'avertissement si l'épandeur d'engrais est mis en fonctionnement sans que les moyens de protection n'aient été placés dans la position de protection, lesquels moyens d'avertissement s'arrêtent d'émettre le signal uniquement lorsque les éléments de protection ont été placés dans la position de protection.

2. Epandeur d'engrais selon la revendication 1, caractérisé en ce que, lors de l'éloignement des moyens de protection, un contact d'un capteur est ouvert ou fermé, de sorte que le signal d'avertissement est activé.

3. Epandeur d'engrais selon la revendication 1 ou 2, caractérisé en ce qu'en plus du signal d'avertissement, on empêche la mise en mouvement des éléments éjecteurs.

4. Epandeur d'engrais selon la revendication 1, 2 ou 3, caractérisé en ce que le signal d'avertissement comporte un signal sonore.

5. Epandeur d'engrais selon l'une quelconque des revendications précédentes, caractérisé en ce que le signal d'avertissement comporte un signal lumineux.

6. Epandeur d'engrais selon l'une quelconque des revendications 1 à 5, caractérisé en ce que le capteur est un capteur magnétique.

7. Epandeur d'engrais selon l'une quelconque des revendications 1 à 5, caractérisé en ce que le capteur est capteur optique.

8. Epandeur d'engrais selon l'une quelconque des revendications 1 à 6, caractérisé en ce que, lors de l'éloignement des moyens de protection, un contact électrique (14) est ouvert ou fermé.

9. Epandeur d'engrais selon l'une quelconque des revendications précédentes, caractérisé en ce que les moyens de protection peuvent tourner autour d'un ou de plusieurs axes (12, 13), tandis que lors d'une rotation, un signal d'avertissement est mis en oeuvre.

10. Epandeur d'engrais selon l'une quelconque des revendications précédentes, caractérisé en ce que l'épandeur d'engrais a un arbre d'entraînement (8) comportant un accouplement (16) qui n'est plus en prise lorsque le signal d'avertissement est émis, de sorte que l'entraînement des éléments éjecteurs est arrêté.

11. Epandeur d'engrais selon l'une quelconque des revendications précédentes, caractérisé en ce que la machine est muni de deux disques d'épandage (18) qui sont entourés au moins partiellement par des moyens de protection ayant la forme d'un étrier de protection (19), tandis qu'au niveau du côté arrière de l'épandeur, l'étrier de protection (20) peut être éloigné partiellement.

12. Epandeur d'engrais selon l'une quelconque des revendications précédentes, caractérisé en ce que le ou les disques d'épandage (5, 18) ont des lames pouvant être ajustées et/ou amovibles (6).

13. Epandeur d'engrais selon l'une quelconque des revendications précédentes, caractérisé en ce que les lames (6) font saillie librement.

14. Epandeur d'engrais selon l'une quelconque des revendications précédentes, caractérisé en ce que les éléments de protection ne peuvent pas être éloignés aussi longtemps que l'entraînement de l'épandeur d'engrais est en prise, et l'entraînement peut seulement être mis en prise après la mise en place de l'étrier de protection (19) dans la position de protection.

15. Epandeur d'engrais selon l'une quelconque des revendications précédentes, muni d'un ou de plusieurs éléments éjecteurs mobiles, tels qu'au moins un disque d'épandage (5) muni de lames (6), et muni de moyens de protection (9), tels qu'un étrier de protection (9), qui entourent les lames (6) à une certaine distance au moins au niveau du côté arrière de la machine, et qui empêchent que les éléments éjecteurs soient touchés d'une manière non-souhaitable, caractérisé en ce que les moyens de protection peuvent être éloignés de manière temporaire, par exemple pivotés en s'éloignant entièrement ou partiellement, et en ce que les éléments de protection ne peuvent pas être éloignés aussi longtemps que l'entraînement de l'épandeur d'engrais est en prise, et l'entraînement peut seulement être mise en prise après la mise en place de l'étrier de protection (19) dans la position de protection.

16. Epandeur d'engrais selon la revendication 14 ou 15, caractérisé en ce que la machine comporte des moyens, tels qu'un commutateur (27), qui empêchent le ou les disques d'épandage (5) d'être mis en rotation aussi longtemps que l'étrier de protection (24) est dans la position éloignée.
